# EUROPÄISCHE PATENTSCHRIFT

(11) **EP 3 443 160 B1**
(45) Veröffentlichungstag und Bekanntmachung des Hinweises auf die Patenterteilung: **29.01.2020**
(21) Anmeldenummer: 17717136.0
(22) Anmeldetag: 10.04.2017
(51) Int. Cl.: D21F 1/00

(54) **FORMIERBAND UND VERFAHREN ZU DESSEN HERSTELLUNG**
FORMING FABRIC AND METHOD OF MANUFACTURING THE SAME
TOILE DE FORMATION ET SON PROCÉDÉ DE FABRICATION

(30) Priorität: 15.04.2016 DE 102016206385
(43) Veröffentlichungstag der Anmeldung: 20.02.2019
(73) Patentinhaber: Voith Patent GmbH, 89522 Heidenheim (DE)
(72) Erfinder: EBERHARDT, Robert, 73479 Ellwangen (DE); GRASER, Siegfried, 89168 Niederstotzingen (DE); SCHMITT, Matthias, 81476 München (DE)
(86) Internationale Anmeldenummer: PCT/EP2017/058495
(87) Internationale Veröffentlichungsnummer: WO 2017/178403

(56) Entgegenhaltungen:
- WO-A1-88/07929
- WO-A1-2010/030298
- WO-A1-2016/058972
- DE-A1-102006 055 828
- US-A- 3 421 230
- US-A- 3 617 442

## Beschreibung

Die vorliegende Erfindung betrifft ein Formierband für eine Maschine zur Herstellung oder Verarbeitung einer Papierbahn gemäß dem Oberbegriff von Anspruch 1, sowie ein Verfahren zur Herstellung der Bespannung.

Bei der Herstellung von Faserstoffbahnen, speziell bei der Herstellung von Papierbahnen wird im sogenannten Former eine wässrige Faserstoffsuspension üblicherweise auf einem Formiersieb oder auch zwischen zwei Formiersieben entwässert, und danach durch Pressen und thermisches Trocknen weiter getrocknet. Für die Entwässerung im Former werden heutzutage nahezu ausschließlich gewebte Siebe aus einem Polymermaterial verwendet. Das Design solcher Gewebe ist üblicherweise so aufgebaut, dass die papierberührende Seite eine feine Struktur aufweist, während die laufseitige Struktur, welche auch das Verschleißvolumen des Siebes bereitstellt, eine grobe Struktur, ggf. auch mit dickeren Fäden aufweist.

Für derartige Siebe ist ein reichhaltiger Stand der Technik bekannt. Als Beispiele seien hier die DE 10 2014 212 306 oder DE 10 2013 218 465 angeführt. All diesen gewebten Formiersieben ist jedoch gemein, dass die so erzeugten Strukturen durch das Webmuster eine hohe Regelmäßigkeit in ihrer Struktur haben. Diese Regelmäßigkeiten können sich trotz optimiertem Gewebedesign in das produzierte Papier entweder einprägen oder als hydraulische Markierungen niederschlagen. Aufgrund ihrer Regelmäßigkeit werden sie durch das menschliche Auge verstärkt wahrgenommen. Derartige Siebmarkierungen stellen vor allem bei graphischen Papieren einen erheblichen Qualitätsmangel des produzierten Papieres dar.

Als Alternative zu gewebten Strukturen werden in jüngster Zeit beispielsweise in der DE 10 2013 224 678 oder auch der WO 2015/185278 Polymerfolien diskutiert, welche mittels Stanzen oder Laserperforation permeabel gemacht werden. Jedoch weist auch hier das entstehende Lochmuster eine hohe Regelmäßigkeit auf, da mit den heute verfügbaren Stanz- oder Laserperforationsverfahren ein rein stochastisches Muster nicht, oder nur mit einem extrem hohen Aufwand realisierbar ist, wodurch ein solches Verfahren nicht wirtschaftlich einsetzbar ist. Abgesehen davon stellt die Anschaffung beispielsweise einer Laserperforationseinrichtung, welche für Folien der hier notwendigen Dimension geeignet ist, auch eine nicht unwesentliche Investition für den Hersteller von Papiermaschinenbespannungen dar. Der bestehende Maschinenpark, insbesondere die üblicherweise vorhandenen Webstühle können für derartige Folienbespannungen nicht weiter verwendet werden.

Ein weiterer Nachteil der bestehenden Formierbänder, speziell der Formiersiebe ist die Tatsache, dass sich in ihrem Volumen eine gewisse Wassermenge sammelt, welche wieder in die Papierbahn zurück gelangen kann. So verbleibt beispielsweise beim Passieren eines Saugkastens ein Teil der dem Blatt entzogenen Wassermenge in der Siebstruktur. Nach dem Durchlauf des Saugkastens gelangen Teiles dieses Wassers wieder zurück in die Papierbahn. Durch diesen Effekt, der als Rückbefeuchtung oder Rewetting bekannt ist, kann sich der Trockengehalt der Papierbahn um mehrere Prozentpunkte erhöhen, was die realisierbare Entwässerungswirkung eines solchen Saugkastens deutlich reduziert.

Die WO 88/07929 A1, WO 2010/030298 A1, US 3 617 442 A, DE 10 2006 055 828 A1 und US 3 421 230 A zeigen Bespannungen mit einer Grundstruktur und einer Polymerschaumlage.

Die Aufgabe der Erfindung besteht darin, ein Formierband sowie ein Verfahren zu dessen Herstellung zur Verfügung zu stellen, das die Nachteile des Standes der Technik hinsichtlich der Markierungsneigung verbessert bzw. überwindet.

Diese Aufgabe wird vollständig gelöst hinsichtlich des Formierbandes durch ein Formierband für eine Maschine zur Herstellung oder Verarbeitung einer Papierbahn gemäß dem Kennzeichen des Anspruchs 1, sowie hinsichtlich des Verfahrens durch ein Verfahren zur Herstellung des Formierbandes gemäß Anspruch 10.

Die Erfindung umfasst eine Bespannung in Form eines Formierbandes für eine Maschine zur Herstellung oder Verarbeitung einer Papierbahn. Die Bespannung weist eine Papierseite auf, welche mit der Papierbahn in Kontakt tritt, sowie eine Laufseite, welche mit Führungs- und Entwässerungelementen, wie z.B. Leitwalzen und/oder Saugkästen in Kontakt steht. Die Bespannung umfasst dabei eine Grundstruktur und zumindest eine weitere Struktur. Erfindungsgemäß ist vorgesehen, dass die zumindest eine weitere Struktur aus einer Lage aus Polymerschaum besteht oder diese umfasst. Dabei stellt diese Lage aus Polymerschaum die Papierseite der Bespannung bereit.

Eine solche Lage aus Polymerschaum ist durch ihre Porenstruktur permeabel, so dass das Wasser aus der Papierbahn durch sie hindurch strömen kann. Jedoch sind die Poren weitgehen stochastisch verteilt. Dadurch können weder regelmäßige Muster in die Papieroberfläche eingeprägt werden, noch können bei der Entwässerung der Papierbahn regelmäßige hydraulische Muster entstehen.

Während in vielen Anwendungen eine solche Bespannung nur aus der Grundstruktur und einer Lage aus Polymerschaum besteht, sind allerdings erfindungsgemäß auch noch weitere Komponenten möglich. Insbesondere kann es vorteilhaft sein, noch eine zwei oder gar dritte Lage aus Polymerschaum vorzusehen, welche beispielsweise zwischen der Grundstruktur und der zumindest einen weiteren Struktur angeordnet sein können.

In weiteren vorteilhaften Ausführungen kann vorgesehen sein, dass auf beiden Seiten der Grundstruktur, also in Richtung der Faserstoffbahn und in Richtung der Maschine jeweils zumindest eine Lage aus Polymerschaum vorgesehen ist.
In anderen, vorteilhaften Ausführungen kann vorgesehen sein, dass nur auf einer Seite der Grundstruktur, nämlich in Richtung der Papierbahn eine oder mehrere Lagen aus Polymerschaum vorgesehen sind.

Weitere vorteilhafte Ausführungen der Erfindung werden in den Unteransprüchen beschrieben.

So kann beispielsweise vorgesehen sein, dass die zumindest eine Lage aus Polymerschaum eine anisotrope Porenstruktur aufweist. Bei einer solchen anisotropen Struktur weicht die Form zumindest eines Großteils (häufig mehr als 50%, oder auch mehr als 80%) der einzelnen Poren von der isotropen Kugelform ab. So kann in einer vorteilhaften Ausführungsform vorgesehen sein, dass die Poren in Maschinenrichtung der Bespannung und in Querrichtung der Bespannung eine größere Ausdehnung aufweisen, als in der Dickenrichtung. Eine derartige Porenstruktur kann beispielsweise durch eine Komprimierung einer Schaumlage mit isotroper Porenstruktur erreicht werden. Häufig kann durch eine solche anisotrope Porenstruktur das Wasser schnell von der Papierbahn weg Richtung Grundstruktur geleitet werden. Auch stellt die Schaumlage dadurch üblicherweise weniger Speichervolumen zur Verfügung.

Erfindungsgemäß weist die zumindest eine Lage aus Polymerschaum eine merkliche Komprimierbarkeit auf: bei einer Druckbelastung der Bespannung von 50 kPa wird die Lage aus Polymerschaum in Dickenrichtung um mehr als 10%, bevorzugt um mehr als 15%, besonders bevorzugt um mehr als 20% komprimiert, verglichen mit der Ausgangsdicke bei einer Druckbelastung von 6 kPa. Eine derartig ausgeführte Lage aus Polymerschaum kann für den Einsatz der Bespannung vorteilhaft sein. Wird nämlich eine solche Bespannung zusammen mit einer darauf abgelegten Papierbahn - und ggf. noch einer weiteren Bespannung - über einen Saugkasten geführt, so wird durch die Sogwirkung des Saugkastens auf die Papierbahn ein Druck auf die Lage aus Polymerschaum ausgeübt, wodurch diese Lage gemäß dieser vorteilhaften Ausführung komprimiert wird. Die angegebenen 6 kPa sollen eine typische Grundlast darstellen, die auch ohne Wirkung des Saugkastens auf die Bespannung wirkt, z.B. bedingt durch das Gewicht der nassen Papierbahn etc. In einer besonders bevorzugten Ausführung der Bespannung ist die Lage aus Polymerschaum so ausgeführt, dass bei einer anschließenden Druckentlastung der Bespannung von 50 kPa auf 6kPa die Lage aus Polymerschaum im Wesentlichen wieder auf ihre Ausgangsdicke expandiert.

In besonders vorteilhaften Ausführungen der Bespannung kann die Kombination aus Kompression über dem Saugkasten und anschließender Expansion nach dem Saugkasten dazu führen, dass der Trockengehalt der Materialbahn erhöht, und die eingangs beschriebene Rückbefeuchtung deutlich reduziert wird. Dieser Effekt konnte überraschenderweise in Versuchen der Anmelderin beobachtet werden. In diesem Falle kann durch Komprimierung der Schaumlage über dem Saugkasten das Wasser aufgrund des verkürzten Entwässerungsweges schneller abgeführt werden. Zudem kann durch die Expansion der Schaumlage nach dem Saugkasten das in den Poren und der Grundstruktur befindliche Wasser nur noch erschwert zurück in die Materialbahn dringen. Diese beiden Effekte können einzeln oder in Kombination zu einer deutlichen Steigerung des Trockengehalts der Materialbahn führen.

In einer weiteren vorteilhaften Ausführungsform kann die Lage aus Polymerschaum aus einem Elastomer, insbesondere einem Polyurethan bestehen, oder dieses umfassen. So kann insbesondere ein sogenannter Polyurethan-Weichschaum, und hier bevorzugt ein retikulierter Polyurethanweichschaum zum Einsatz kommen. Jedoch können erfindungsgemäß auch andere Materialien für die Lage aus Polymerschaum verwendet werden, wie z.B. ein Silikon, Polyester, Polyether etc.

In bevorzugten Ausführungen kann die Lage aus Polymerschaum ein Flächengewicht zwischen 60 g/m² und 300 g/m² aufweisen.
In weiteren bevorzugten Ausführungen kann die Lage aus Polymerschaum eine Rohdichte zwischen 100 kg/m³ und 700 kg/m³ aufweisen.

Die Grundstruktur der Bespannung kann vorteilhafterweise ein Gewebe, ein Gelege oder eine permeable Folienstruktur umfassen oder daraus bestehen.
Insbesondere kann die Verwendung eines Gewebes als Grundstruktur vorteilhaft sein. Häufig steht dem Hersteller von klassischen Formiersieben nämlich bereits ein Maschinenpark an geeigneten Webstühlen zur Verfügung. In diesem Fall kann die erfindungsgemäße Bespannung vergleichsweise einfach unter Verwendung des bestehenden Maschinenparks an Webstühlen hergestellt werden.

Vorteilhafterweise kann die Grundstruktur eine Permeabilität von mehr als 1,27 m³/m².s (250 cfm), insbesondere mehr als 2,54 m³/m².s (500 cfm) aufweisen.

Besonders vorteilhafterweise kann die Bespannung eine Permeabilität zwischen 0,058 m³/m².s (100 cfm) und 3,56 m³/m².s (700 cfm), insbesondere zwischen 1,02 m³/m².s (200 cfm) und 3,05 m³/m².s (600 cfm) aufweisen.

Die Grundstruktur ebenso wie die gesamte Bespannung sind vorteilhafterweise für Wasser und für Gas permeabel. Zur Charakterisierung der Permeabilität hat sich jedoch die Bestimmung der Permeablität mittels der Durchströmung mit Luft etabliert. Die Einheit cfm=Cubic Foot per Minute ist hierbei eine in der Bewertung der Permeabilität von Bespannungen übliche Einheit. Hierbei entsprechen 100 cfm rund 0.508 m³/m².s.

Insbesondere ist an der erfindungsgemäßen Bespannung vorteilhaft, dass die Permeablität der Bespannung in weiten Teilen über die Permeabilität der Lage aus Polymerschaum gesteuert werden kann. Da die Permeabilität der Schaumlage wiederum vergleichsweise einfach z.B. durch Kompaktierung geändert werden kann, ist es möglich, erfindungsgemäße Bespannungen über einen weiten Anwendungsbereich auch wenigen standardisierten Ausgangselementen (Grundstrukturen, standard Schaumlagen) herzustellen.

In einer weiteren, vorteilhaften Ausführung der Bespannung kann vorgesehen sein, dass in die Lage aus Polymerschaum eine Struktur, insbesondere aber nicht ausschließlich einer regelmäßige Struktur eingebracht ist. Beispielsweise kann diese Struktur in den Polymerschaum eingeprägt sein. Während durch eine erfindungsgemäße Bespannung die unerwünschten, regelmäßigen Markierungen (z.B. Siebmarkierungen) unterdrückt werden, kann es in manchen Anwendungen aber gewünscht sein, in einem fertigen Papier spezielle Strukturen oder Symbole zu übertragen. Beispiele hierfür sind Wasserzeichen oder gewisse dekorative Strukturen in Tissuepapieren. Durch solche Zeichen oder Strukturen in der Schaumlage, insbesondere durch eingeprägte Strukturen in der Schaumlage ist es möglich, auf die produzierte Faserstoffbahn eine Vielzahl von Strukturen zu übertragen.

Je nach Einsatz einer solchen Bespannung können die Strukturen in der Faserstoffbahn als erhabene Strukturen hervortreten.

Eine besonders vorteilhafte Verwendung einer erfindungsgemäßen Bespannung kann die Verwendung als Formierband im Former einer Maschine zur Herstellung einer Papier-, Karton- oder Tissuebahn darstellen. Hierbei kann das Formierband beispielsweise als Endlosband ausgeführt sein, oder aber auch als nahtbare Bespannung.

Hinsichtlich des Verfahrens wird die Aufgabe gelöst durch ein Verfahren zur Herstellung der erfindungsgemäßen Bespannung, umfassend die Schritte:
a) Bereitstellen einer Grundstruktur,
b) Bereitstellen einer weiteren Struktur,
c) Verbinden der zumindest einen weiteren Struktur mit der Grundstruktur.

Das erfindungsgemäße Verfahren ist dadurch gekennzeichnet, dass die weitere Struktur aus einer Lage aus Polymerschaum besteht oder diese umfasst und das Verfahren zudem den Schritt umfasst:
d) Kompaktieren der Lage aus Polymerschaum unter dem Einfluss von Druck und/oder Temperatur.

Der Verfahrensschritt des Kompaktierens erlaubt es, bei der Herstellung der Bespannung eine Vielzahl von Eigenschaften der Lage aus Polymerschaum gezielt an die Anforderungen anzupassen, die an die Bespannung im Einsatz gestellt werden. Beispielhaft und nicht abschließend seien hier erwähnt:
Anpassung der Dicke der Lage aus Polymerschaum, änderung der Anisotropie der Porenstruktur. Durch das Kompaktieren kann die Ausdehnung zumindest eines Großteils der Poren in Dickenrichtung verkleinert werden. Dadurch kann auch eine Anpassung der Permeabilität der Lage aus Polymerschaum erzielt werden.

Weiterhin kann durch das Kompaktieren auch die Komprimierbarkeit und/oder die Elastizität der Lage aus Polymerschaum angepasst werden.

Somit kann beispielsweise unter Verwendung von kommerziell erhältlichen standardisierten Polymerschäumen eine hohe Bandbreite von speziell angepassten Bespannungen hergestellt werden.
Ein weiterer Effekt, der durch eine Kompaktierung erzielt werden kann, ist eine weitere Verbesserung der Oberflächeneigenschaften der papierberührenden Seite der Bespannung. So kann es erreicht werden, dass durch die Einwirkung von Druck und/oder Temperatur das Material der Schaumlage oberflächlich angeschmolzen wird. Dadurch können sich berührende Schaumelemente bzw. Stege stoffschlüssig miteinander verbinden. So entstehende Oberflächen können eine gesteigerte mechanische Stabilität bzw. Abriebfestigkeit aufweisen.

Bevorzugte Ausführungen des Verfahrens werden in den Unteransprüchen beschrieben.

Das Kompaktieren kann beispielsweise durch Verpressen bei erhöhter Temperatur mit anschließendem Abkühlen erfolgen. Ein Abkühlen kann unter Beibehaltung des Kompaktierungsdrucks erfolgen. Teilweise kann darauf aber auch ganz verzichtet werden, bzw. das Abkühlen kann unter einem verminderten Druck (<90% des Kompaktierungsdrucks, insbesondere < 75% des Kompaktierungsdrucks) erfolgen.
Geeignete Vorrichtungen zum Realisieren einer Verpressung können sogenannte Doppelbandpressen darstellen.
Vorteilhafte Temperaturen für die Kompaktierung können sich bei unterschiedlichen Anwendungen und Materialien unterscheiden. Bei bevorzugten Anwendungen, wie z.B. von Polyurethan Weichschäumen können die benötigten Temperaturen im Bereich zwischen 150°C und 200°C liegen.
Insbesondere wenn die Kompaktierung nach dem Verbinden der Schaumlage mit der Grundstruktur erfolgt besteht eine weitere vorteilhafte Möglichkeit der Kompaktierung darin, die Bespannung durch einen Kalander laufen zu lassen. Hierbei kann der Kalander einen Walzennip aufweisen wobei zumindest eine Walze beheizt ist. Vorteilhafterweise ist dabei häufig die Walze beheizt, welche mit der Schaumlage in Kontakt kommt.

In vorteilhaften Ausführungen des Verfahrens kann vorgesehen sein, dass das Kompaktieren in einem Verfahrensschritt erfolgt. In weiteren vorteilhaften Ausführungen kann auch vorgesehen sein, dass das Kompaktieren in mehreren Verfahrensschritten erfolgt.
So kann beispielsweise vorgesehen sein, dass das Verbinden der zumindest einen weiteren Struktur mit der Grundstruktur mittels Verschweißen, insbesondere Lasertransmissionsschweißen, Flammkaschierung oder Verkleben erfolgt.

In vorteilhaften Ausführungen des Verfahrens kann das Kompaktieren der Lage aus Polymerschaum vor oder nach dem Verbinden der zumindest einen weiteren Struktur mit der Grundstruktur erfolgen. Besonders vorteilhafterweise kann sowohl vor dem Verbinden als auch nach dem Verbinden eine Kompaktierung vorgenommen werden.

Üblicherweise weisen geeignete, kommerziell erhältliche Polymerschäume, wie z.B. Polyurethan Weichschäume Dicken im Bereich von 2.5mm bis 9mm, insbesondere zwischen 3.5mm und 7mm auf.

In besonders bevorzugten Ausführungen des Verfahrens beträgt die Dicke der Schaumlage nach dem Kompaktieren weniger als 30%, bevorzugt weniger als 25%, besonders bevorzugt weniger als 20% der Ausgangsdicke.
Bzgl. der Bestimmung der Dicke der Schäume sei angemerkt, dass diese -im Gegensatz zu der Bestimmung der Komprimierbarkeit und Elastizität der Bespannung- drucklos ermittelt werden, also ohne Anlegen einer Grundlast von 6kPa. Erfolgt die Kompaktierung der Lage aus Polymerschaum nach dem Befestigen an der Grundstruktur, so kann es vorkommen, dass dadurch Teile der Schaumlage in Vertiefungen der Tragstruktur eindringen bzw. eingedrückt werden. Dieser Anteil wird nicht zur Bestimmung der Dicke der Schaumlage herangezogen.
In weiteren vorteilhaften Ausführungen kann der Polymerschaum vor dem Kompaktieren eine Porendichte zwischen 11.8 und 31.5 Poren pro cm (30 und 80 Poren pro Inch (PPI)), vorzugsweise zwischen 17.7 und 23.6 Poren pro cm (45 und 60 PPI) aufweisen.

PPI ist hierbei eine international übliche Maßeinheit für die Durchlässigkeit poröser Materialien und beschreibt eine lineare Strukturdichte.
In weiteren vorteilhaften Ausführungen weist der Polymerschaum vor dem Kompaktieren eine Rohdichte zwischen 15 und 60kg/m³, bevorzugt zwischen 25 und 35 kg/m³ auf.

In einer weiteren vorteilhaften Ausführung kann vorgesehen sein, dass das Verfahren einen Schritt umfasst, bei dem auf die Lage aus Polymerschaum eine Struktur übertragen, insbesondere eingeprägt wird. In einer besonders bevorzugten Ausführung kann das Übertragen der Struktur gleichzeitig mit dem Kompaktieren der Lage aus Polymerschaum erfolgen.

In einer ganz besonders bevorzugten Ausführung kann vorgesehen sein, dass beim Kompaktieren eine heiße Walze zum Einsatz kommt, die mit der Lage aus Polymerschaum in Kontakt gebracht wird. Diese Walze kann vorteilhafterweise so ausgerüstet sein, dass eine auf den Schaum zu übertragende Struktur als Negativ in die Walzenoberfläche eingearbeitet ist. Diese Struktur kann aus einem wärmeleitenden Material sein (z.B. Metall) oder aus einem nichtwärmeleitenden Material wie einem Polymer (z.B. ein Silikon). Während des Kompaktierens wird die Struktur dann in die Oberfläche der Schaumlage eingeprägt. Alternativ oder zusätzlich ist auch möglich, Strukturelemente in die Walzenoberfläche einzuarbeiten; z.B. einzugravieren. Diese Strukturelemente verbleiben dann nach dem Kompaktieren als erhabene Elemente in der Schaumlage.
Mittels einer derartigen Übertragung von Strukturen auf die Schaumlage ist es im Gegensatz z.B. zu klassischen Wasserzeichen möglich, dass die Bespannung an den Stellen der Strukturmerkmale weiterhin eine relevante Permeabilität aufweist. Je nach Ausgestaltung der Struktur kann diese gegebenenfalls etwas größer oder kleiner sein, als die Permeabilität der übrigen Bespannung. Dies kann unter anderem dann von Vorteil sein, wenn die Strukturen bzw. Strukturelemente einen signifikanten Teil, insbesondere mehr als 10% der Oberfläche der Materialbahn bedecken. Auch durch diese Regionen der Bespannung erfolgt eine Entwässerung der Materialbahn. Somit ist die Entwässerung der Materialbahn wesentlich gleichmäßiger im Vergleich zu klassischen Wasserzeichen für Formiersiebe, bei denen in Regionen mit aufgebrachter Struktur üblicherweise keine Entwässerung stattfindet.

Im Folgenden wird die Erfindung anhand schematischer Figuren weiter erläutert.

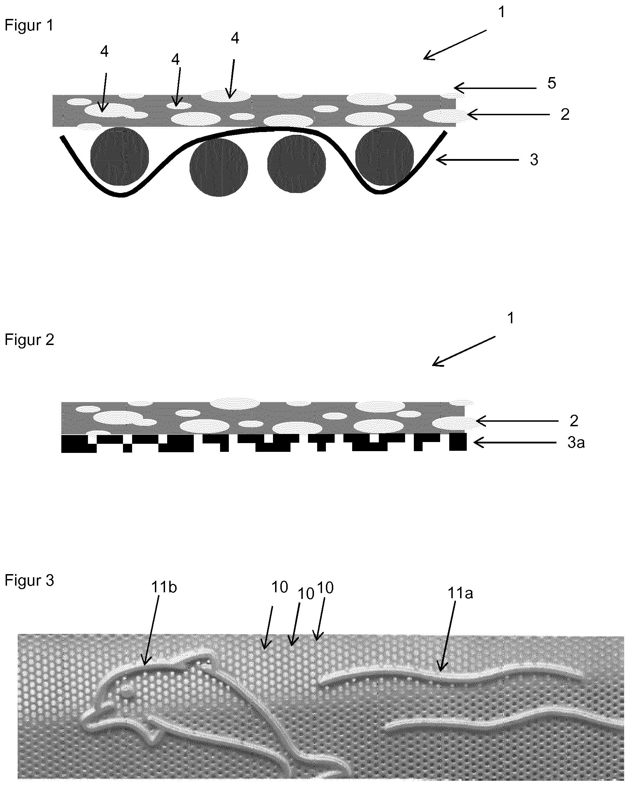

Figur 1 und 2 zeigen zwei Ausführungen einer Bespannung gemäß der Erfindung. Figur 3 zeigt einen Ausschnitt aus der Oberfläche einer Walze zur Übertragung einer Struktur auf eine Schaumlage

In Figur 1 ist grob schematisch der Aufbau einer Bespannung 1 in Form eines Formierbandes gezeigt. In der hier gezeigten Ausführung umfasst die Bespannung ein Gewebe 3, das die Grundstruktur 3 zur Verfügung stellt. Auf dieser Grundstruktur 3 ist eine Lage aus Polymerschaum 2 befestigt. Diese kann beispielsweise aus einem Polyurethan Weichschaum bestehen. Diese Lage aus Polymerschaum 2 stellt auch die papierberührende Seite der Bespannung 5 zur Verfügung. Die Poren 4 der Lage aus Polymerschaum 2 sind in der in Figur 1 gezeigten Bespannung anisotrop. Dies kann beispielsweise dadurch realisiert werden, dass ein standard Polymerschaum, welcher üblicherweise isotrope Poren aufweist, durch einen Kompaktierungsschritt mittels Druck und/oder Temperatur kompaktiert worden ist. Dadurch ändert sich neben der Dicke der Schaumlage 2 auch die Form der Poren 4. Sie werden in Dickenrichtung deformiert. An einem exemplarischen Beispiel soll ein mögliches Herstellungsverfahren für eine Bespannung wie in Figur 1 gezeigt erläutert werden. In dem Beispiel wird zuerst eine gewebte Grundstruktur 3 zur Verfügung gestellt wird. Diese ist aus Polyesterfilamenten gewebt sein. Zudem wird ein Schaum in Form eines retikulierten Polyurethan Weichschaums zur Verfügung gestellt. Dieser weist im Beispiel eine Dicke von 4mm und eine Porendichte von 17.7 Poren pro cm (45 PPI) auf. Ein geeignetes Verfahren zum Verbinden der Lagen aus Polymerschaum 2 mit der Grundstruktur 3 stellt das Lasertransmissionsschweißen dar. Im Beispiel wird ein NIR Laser mit einer Wellenlänge von 940 nm eingesetzt. Dieser wurde mit einem Fügedruck von ca. 20N/cm angepresst. Besonders vorteilhaft ist es für das Lasertransmissionsschweißen, wenn der Polymerschaum 2 das Laserlicht ganz oder teilweise absorbiert, während die Grundstruktur 3 für das Laserlicht ganz oder weitgehend transparent ist. Dies wurde im Beispiel durch Färben des Polymerschaums realisiert, wo ein anthrazitfarbener Schaum zum Einsatz kam. Durch die Wahl eines Grundgewebes aus Polyester konnte das Laserlicht zuerst die Grundstruktur 3 durchdringen, und wurde danach durch den Polymerschaum absorbiert wird. So wurde die zum Verschweißen notwendige Hitze an der Verbindungsstelle zwischen Grundstruktur 3 und Schaumlage 2 erzeugt. Dies ist ein übliches Prinzip im Lasertransmissionschweißen.

Das so verbundene Laminat wurde dann bei einer Temperatur von ca. 190° unter Druck kompaktiert. Die resultierende Bespannung 1 wies eine Permeabilität von 2,03 m³/m².s (400 cfm) bei einer Dicke (gemessen unter 6kPa Druck) von 1.07 mm auf. Dabei betrug in dem Beispiel der Anteil der Grundstruktur 3 0.49mm, der Anteil der Schaumlage 2 0.58mm. Bei einer Ausgangsdicke des Schaums von 4mm wurde dieser durch das Verfahren auf 14.5% seiner Ausgangsdicke kompaktiert.

Unter einem Druck von 50 kPa wurde das Laminat 1 auf 0.91 mm komprimiert, wobei die Dicke der Schaumlage 2 0.42mm betrug. Die Schaumlage wurde also bei diesem Druck um weitere 27% komprimiert. Beim Rücknahme des Drucks auf 6 kPa expandierte die Schaumlage wieder auf -im Rahmen der Messgenauigkeit- ihre Ausgangsdicke.

Bei Versuchen der Anmelderin konnte auch mit der im Beispiel beschriebenen Bespannung ein überraschend höherer Trockengehalt in einem Papier erzielt werden, als mit vergleichbaren Sieben ohne Schaumlage 2. Auch die reduzierte Markierungsneigung konnte hier demonstriert werden.

Figur 2 zeigt eine schematische Darstellung einer Erfindungsgemäßen Bespannung, bei der die Grundstruktur 3a durch eine permeable Folienstruktur 3a zur Verfügung gestellt wird. Dabei kann es sich bei der Folienstruktur 3a um eine einzelne, perforierte Folie handeln. Alternativ kann eine solche Folienstruktur selbst aus einem Laminat verschiedener Folien aufgebaut sein. Die Verbindung von Schaumlage 2 und Grundstruktur 3a kann dabei beispielsweise durch Schweißen oder durch Verkleben erfolgen.

Figur 3 zeigt einen Ausschnitt aus der Oberfläche einer Walze zur Übertragung einer Struktur auf eine Schaumlage. In dem hier gezeigten Beispiel weist die Walze sowohl erhabene Strukturelemente 11a, 11b auf, welche in eine Lage aus Polymerschaum 2 eingeprägt werden. Außerdem weist der Ausschnitt in Figur 3 eine Vielzahl von Strukturelementen 10 auf, welche als runde Vertiefungen in der Walzenoberfläche ausgeführt sind. Diese Strukturelemente werden als erhabene Elemente auf die Schaumlage 2 übertragen.

Bei dem in Figur 3 gezeigten Beispiel sind sowohl die Walzenoberfläche als auch die erhabenen Strukturelemente 11a, 11b aus Metall ausgeführt. Es kann jedoch auch vorgesehen sein, dass diese erhabenen Strukturelemente 11a, 11b ganz oder teilweise aus einem nichtwärmeleitenden Material, z.B. einem Polymer bestehen. Obwohl das Übertragen der Strukturelemente 10, 11a, 11b auf den Polymerschaum 2 mittels einer solchen oder ähnlichen Walze prinzipiell in einem gesonderten Arbeitsschritt im Vorfeld oder im Anschluss an die Herstellung der Bespannung erfolgen kann, wird die Übertragung jedoch häufig vorteilhafterweise zusammen mit dem Kompaktieren der Schaumlage erfolgen. Auf diese Weise kann ein Prozessschritt bei der Herstellung der Bespannung entfallen. Zudem sind keine zusätzlichen Geräte für diese Übertragung notwendig.

## Patentansprüche

1. Formierband (1) für eine Maschine zur Herstellung oder Verarbeitung einer Papierbahn, wobei das Formierband (1) eine Papierseite (5) und eine Laufseite aufweist, umfassend eine Grundstruktur (3) und zumindest eine weitere Struktur (2) wobei die zumindest eine weitere Struktur (2) aus einer Lage aus Polymerschaum (2) besteht oder diese umfasst, und diese Lage aus Polymerschaum (2) die Papierseite (5) des Formierbands (1) bereitstellt, **dadurch gekennzeichnet, dass** bei einer Druckbelastung des Formierbands (1) von 50 kPa die Lage aus Polymerschaum (2) in Dickenrichtung um mehr als 10%, bevorzugt um mehr als 15% komprimiert wird, verglichen mit der Ausgangsdicke bei einer Druckbelastung von 6 kPa.

2. Formierband (1) gemäß Anspruch 1, **dadurch gekennzeichnet, dass** die zumindest eine Lage aus Polymerschaum (2) eine anisotrope Porenstruktur aufweist.

3. Formierband (1)gemäß Anspruch 1 oder 2, **dadurch gekennzeichnet, dass** die Grundstruktur (3) eine Permeabilität von mehr als 1,27 m³/m².s (250 cfm), insbesondere mehr als 2,54 m³/m².s (500 cfm) aufweist.

4. Formierband (1) gemäß Anspruch 3, **dadurch gekennzeichnet, dass** bei einer anschließenden Druckentlastung des Formierbands (1) von 50 kPa auf 6kPa die Lage aus Polymerschaum (2) im Wesentlichen wieder auf ihre Ausgangsdicke expandiert.

5. Formierband (1) gemäß einem der vorherigen Ansprüche, **dadurch gekennzeichnet, dass** die Lage aus Polymerschaum (2) aus retikulierten Polyurethanweichschaum besteht, oder diesen umfasst.

6. Formierband (1) gemäß einem der vorherigen Ansprüche, **dadurch gekennzeichnet, dass** die Lage aus Polymerschaum (2) ein Flächengewicht zwischen 60 g/m² und 300 g/m² aufweist.

7. Formierband (1) gemäß einem der vorherigen Ansprüche, **dadurch gekennzeichnet, dass** die Lage aus Polymerschaum (2) eine Rohdichte zwischen 100 kg/m³ und 700 kg/m³ aufweist.

8. Formierband (1) gemäß einem der vorherigen Ansprüche, **dadurch gekennzeichnet, dass** die Bespannung eine Permeabilität zwischen 0.508 m³/m².s (100 cfm) und 3,56 m³/m².s (700 cfm), insbesondere zwischen 1,02 m³/m².s (200 cfm) und 3,05 m³/m².s (600 cfm) aufweist.

9. Formierband (1) gemäß einem der vorherigen Ansprüche, **dadurch gekennzeichnet, dass** in die Lage aus Polymerschaum (2) eine Struktur, insbesondere eine regelmäßige Struktur eingebracht ist.

10. Verfahren zur Herstellung eines Formierbands (1) gemäß einem der Ansprüche 1-9, umfassend die Schritte:
a) Bereitstellen einer Grundstruktur (3),
b) Bereitstellen einer weiteren Struktur (2),
c) Verbinden der zumindest einen weiteren Struktur (2) mit der Grundstruktur (3), , wobei die weitere Struktur (2) aus einer Lage aus Polymerschaum (2) besteht oder diese umfasst und das Verfahren zudem den Schritt umfasst:
d) Kompaktieren der Lage aus Polymerschaum (2) unter dem Einfluss von Druck und/oder Temperatur.

11. Verfahren gemäß Anspruch 10, **dadurch gekennzeichnet, dass** das Verbinden der zumindest einen weiteren Struktur (2) mit der Grundstruktur (3) mittels Verschweißen, insbesondere Lasertransmissionsschweißen oder Verkleben erfolgt.

12. Verfahren gemäß Anspruch 10 oder 11, **dadurch gekennzeichnet, dass** das Kompaktieren der Lage aus Polymerschaum (2) vor und/oder nach dem Verbinden der zumindest einen Lage aus Polymerschaum (2) mit der Grundstruktur (3) erfolgt.

13. Verfahren gemäß einem der Ansprüche 10 bis 12, **dadurch gekennzeichnet, dass** die Dicke der Lage aus Polymerschaum (2) nach dem Kompaktieren weniger als 30%, bevorzugt weniger als 25%, besonders bevorzugt weniger als 20% der Ausgangsdicke beträgt.

14. Verfahren gemäß einem der Ansprüche 10 bis 13, **dadurch gekennzeichnet, dass** das Verfahren einen Schritt umfasst, bei dem auf oder in die Lage aus Polymerschaum (2) eine Struktur übertragen, insbesondere eingeprägt wird.

15. Verfahren gemäß Anspruch 14, **dadurch gekennzeichnet, dass** das Übertragen der Struktur gleichzeitig mit dem Kompaktieren der Lage aus Polymerschaum (2) erfolgt.

## Claims

1. Forming belt (1) for a machine for producing or processing a paper web, wherein the forming belt (1) has a paper side (5) and a running side, comprising a basic structure (3) and at least one further structure (2), wherein the at least one further structure (2) is composed of or comprises a tier of polymer foam (2) and said tier of polymer foam (2) provides the paper side (5) of the forming belt (1), **characterized in that** in a compressive stressing of the forming belt(1) of 50 kPa the tier of polymer foam (2) in the thickness direction is compressed by more than 10%, preferably by more than 15%, as compared to an initial thickness at a compressive stress of 6 kPa.

2. Forming belt (1) according to Claim 1, **characterized in that** the at least one tier of polymer foam (2) has an anisotropic pore structure.

3. Forming belt according to Claim 1 or 2, **characterized in that** the basic structure (3) has a permeability of more than 1.27 m³/m².s (250 cfm), in particular more than 2.54 m³/m².s (500 cfm).

4. Forming belt (1) according to Claim 3, **characterized in that** in a subsequent compressive de-stressing of forming belt (1) from 50 kPa to 6 kPa the tier of polymer foam (2) expands back to substantially the initial thickness thereof.

5. Forming belt (1) according to one of the preceding claims, **characterized in that** the tier of polymer foam (2) is composed of or comprises reticulated polyurethane soft foam.

6. Forming belt (1) according to one of the preceding claims, **characterized in that** the tier of polymer foam (2) has an area weight between 60 g/m² and 300 g/m².

7. Forming belt (1) according to one of the preceding claims, **characterized in that** the tier of polymer foam (2) has a raw density between 100 kg/m³ and 700 kg/m³.

8. Forming belt (1) according to one of the preceding claims, **characterized in that** the covering has a permeability between 0.508 m³/m².s (100 cfm) and 3.56 m³/m².s (700 cfm), in particular between 1.02 m³/m².s (200) cfm) and 3.05 ₘ³/ₘ2ₛ (600 cfm) .

9. Forming belt (1) according to one of the preceding claims, **characterized in that** a structure, in particular a uniform structure, is incorporated in the tier of polymer foam (2).

10. Method for producing a forming belt (1) according to one of Claims 1 to 9, said method comprising the following steps:
a) providing a basic structure (3);
b) providing a further structure (2);
c) connecting the at least one further structure (2) to the basic structure (3);
wherein the further structure (2) is composed of or comprises a tier of polymer foam (2), and the method moreover comprises the following method step:
d) compacting the tier of polymer foam (2) under the influence of pressure and/or temperature.

11. Method according to Claim 10, **characterized in that** the connecting of the at least one further structure (2) to the basic structure (3) is performed by means of welding, in particular laser transmission welding, or adhesive bonding.

12. Method according to Claim 10 or 11, **characterized in that** the compacting of the tier of polymer foam (2) is performed before and/or after connecting the at least one tier of polymer foam (2) to the basic structure (3).

13. Method according to one of Claims 10 to 12, **characterized in that** the thickness of the tier of polymer foam (2) after compacting is less than 30%, preferably less than 25%, particularly preferably less than 20%, of the initial thickness.

14. Method according to one of Claims 10 to 13, **characterized in that** the method comprises a step in which a structure is transferred onto or into, in particular embossed in, the tier of polymer foam (2).

15. Method according to Claim 14, **characterized in that** transferring the structure is performed simultaneously with the compacting of the tier of polymer foam (2).

## Revendications

1. Bande de façonnage (1) pour une machine destinée à la fabrication ou à la transformation d'une feuille continue de papier, la bande de façonnage (1) possédant un côté papier (5) et un côté défilement, comprenant une structure de base (3) et au moins une structure supplémentaire (2), l'au moins une structure supplémentaire (2) se composant d'une couche en mousse de polymère (2) ou comportant celle-ci, et cette couche en mousse de polymère (2) fournissant le côté papier (5) de la bande de façonnage, **caractérisée en ce que** lors d'une mise en charge de pression de la bande de façonnage (1) à 50 kPa, la couche en mousse de polymère (2) est comprimée dans le sens de l'épaisseur de plus de 10 %, de préférence de plus de 15 %, par rapport à l'épaisseur initiale avec une mise en charge de pression de 6 kPa.

2. Bande de façonnage (1) selon la revendication 1, **caractérisée en ce que** l'au moins une couche en mousse de polymère (2) possède une structure poreuse anisotrope.

3. Bande de façonnage (1) selon la revendication 1 ou 2, **caractérisée en ce que** la structure de base (3) présente une perméabilité de plus de 1,27 m³/m².s (250 cfm), notamment de plus de 2,54 m³/m².s (500 cfm).

4. Bande de façonnage (1) selon la revendication 3, **caractérisée en ce que** lors d'un soulagement de pression subséquent de la bande de façonnage (1) de 50 kPa à 6 kPa, la couche en mousse de polymère (2) s'expanse de nouveau sensiblement à son épaisseur initiale.

5. Bande de façonnage (1) selon l'une des revendications précédentes, **caractérisée en ce que** la couche en mousse de polymère (2) se compose de mousse tendre de polyuréthane réticulée ou comporte celle-ci.

6. Bande de façonnage (1) selon l'une des revendications précédentes, **caractérisée en ce que** la couche en mousse de polymère (2) possède une masse surfacique comprise entre 60 g/m² et 300 g/m².

7. Bande de façonnage (1) selon l'une des revendications précédentes, **caractérisée en ce que** la couche en mousse de polymère (2) possède une densité brute comprise entre 100 kg/m³ et 700 kg/m³.

8. Bande de façonnage (1) selon l'une des revendications précédentes, **caractérisée en ce que** l'entoilage présente une perméabilité comprise entre 0,508 m³/m².s (100 cfm) et 3,56 m³/m².s (700 cfm), notamment entre 1,02 m³/m² .s (200 cfm) et 3,05 m³/m².s (600 cfm).

9. Bande de façonnage (1) selon l'une des revendications précédentes, **caractérisée en ce qu'**une structure, notamment une structure régulière, est incorporée dans la couche en mousse de polymère (2).

10. Procédé de fabrication d'une bande de façonnage (1) selon l'une des revendications 1 à 9, comprenant les étapes suivantes :
a) fourniture d'une structure de base (3),
b) fourniture d'une structure supplémentaire (2),
c) assemblage de l'au moins une structure supplémentaire (2) avec la structure de base (3), la structure supplémentaire (2) se composant d'une couche en mousse de polymère (2) ou comportant celle-ci, et le procédé comprenant en plus l'étape suivante :
d) compactage de la couche en mousse de polymère (2) sous l'influence de la pression et/ou de la température.

11. Procédé selon la revendication 10, **caractérisé en ce que** l'assemblage de l'au moins une structure supplémentaire (2) avec la structure de base (3) est réalisé par soudage, notamment soudage par transmission laser, ou par collage.

12. Procédé selon la revendication 10 ou 11, **caractérisé en ce que** le compactage de la couche en mousse de polymère (2) est effectué avant et/ou après l'assemblage de l'au moins une couche en mousse de polymère (2) avec la structure de base (3).

13. Procédé selon l'une des revendications 10 à 12, **caractérisé en ce que** l'épaisseur de la couche en mousse de polymère (2) après le compactage est inférieure à 30 %, de préférence inférieure à 25 %, notamment de préférence inférieure à 20 % de l'épaisseur initiale.

14. Procédé selon l'une des revendications 10 à 13, **caractérisé en ce que** le procédé comprend une étape lors de laquelle une structure est transmise, notamment incrustée, sur ou dans la couche en mousse de polymère (2) .

15. Procédé selon la revendication 14, **caractérisé en ce que** la transmission de la structure est effectuée simultanément avec le compactage de la couche en mousse de polymère (2).
